# EUROPÄISCHE PATENTSCHRIFT

(11) **EP 2 444 833 B1**
(45) Veröffentlichungstag und Bekanntmachung des Hinweises auf die Patenterteilung: **21.08.2019**
(21) Anmeldenummer: 11186060.7
(22) Anmeldetag: 21.10.2011
(51) Int. Cl.: G02B 21/10, G02B 21/36, G02B 21/00, G02B 21/06, G02B 21/16, G01N 21/64

(54) **SPIM-Mikroskop mit sequenziellem Lightsheet**
SPIM microscope with sequential light sheet
Microscope SPIM avec nappe lumineuse séquentielle

(30) Priorität: 22.10.2010 DE 102010060121; 15.06.2011 EP 11169989
(43) Veröffentlichungstag der Anmeldung: 25.04.2012
(73) Patentinhaber: Leica Microsystems CMS GmbH, 35578 Wetzlar (DE)
(72) Erfinder: Knebel, Werner, 76709 Kronau (DE); Oestreicher, Wolfgang, 79104 Freiburg im Breisgau (DE)
(74) Vertreter: Schaumburg und Partner Patentanwälte mbB

(56) Entgegenhaltungen:
- WO-A1-2009/124700
- DE-A1-102007 045 897
- GB-A- 2 416 453
- US-B2- 7 787 179

## Beschreibung

Die Erfindung betrifft ein SPIM-Mikroskop mit einer Beleuchtungsquelle, welche einen Beleuchtungs-Lichtstrahl aus einer y-Richtung auf ein abzubildendes Objekt sendet; und einer Kamera, welche in z-Richtung als einer ersten Detektionsrichtung von einem Objekt ausgesendetes Fluoreszenzlicht und/oder reflektiertes Licht erfasst, wobei sich die z-Richtung im Wesentlichen senkrecht zur y-Richtung erstreckt.

Insbesondere biologische Proben sollen schnell und schonend untersucht werden. Oft ist es dazu zweckdienlich, ein dreidimensionales Bild zu erzeugen. Streuungs- und Absorbtionsartefakte sollen vermieden werden, welche durch Wechselwirkung des Beleuchtungslichts mit der Probe selbst entstehen, insbesondere bei der Anwendung von Fluoreszenz-Mikroskopie, bei welcher das Beleuchtungslicht die Funktion eines Anregungslichts zum Anregen von Fluoreszenz hat.

Zur schnellen und probenschonenden, hochaufgelösten Untersuchung mikroskopischer Proben eignet sich insbesondere die so genannte SPIM-Technik (Selective Plane Illumination Microscopy), die als Beleuchtungslicht ein Lightsheet verwendet, während das durch Fluoreszenz und Reflexion erzeugte Detektionslicht senkrecht zur Beleuchtungsrichtung mit einer Kamera beobachtet wird.

Unter einem Lightsheet versteht man ein Beleuchtungsvolumen mit einem im Wesentlichen rechteckigen Querschnitt, wobei der Querschnitt in einer ersten Querschnittsrichtung (hier z-Richtung) sehr dünn ist und in einer zweiten Querschnittsrichtung (hier x-Richtung) ein deutlich größeres Ausmaß als in der ersten Querschnittsrichtung aufweist. Die Beleuchtungsrichtung (hier y-Richtung) erstreckt sich im Wesentlichen quer zur ersten Querschnittsrichtung (hier z-Richtung) und zweiten Querschnittsrichtung (hier x-Richtung). Das Lightsheet wird mittels einer Zylinderlinse fokussiert, wobei unter einem Fokus bzw. einer Fokuslänge des Lightsheets ein gewisser sich in der Beleuchtungsrichtung (hier y-Richtung) erstreckender Bereich zu verstehen ist, in welchem das Lightsheet besonders dünn ist, so dass sich das Beleuchtungsvolumen wie eine Art Blatt darstellt, d.h. sehr dünn in z-Richtung und deutlich größer in x- und y-Richtung ist.

Die herkömmliche Erzeugung eines Lightsheets mit Hilfe einer Zylinderlinse bei der SPIM-Technik hat den Nachteil, dass das System recht unflexibel ist, beispielsweise einen fest vorgegebenen Fokus und damit ein fest vorgegebenes Beleuchtungsvolumen aufweist. Für eine hohe Auflösung vorteilhaft ist ein möglichst dünner und langgestreckter Fokus. Dieser Fokus kann zur Erzeugung eines dreidimensionalen Bildes in einer Richtung über die Probe geführt werden. Da mit der Länge des Fokus auch seine Breite zunimmt - das heißt die Dicke des Lightsheets zunimmt - reduziert sich damit die z-Auflösung. Das heißt bei einem langgezogenen Fokus bei einer kleinen numerischen Apertur der Beleuchtungsoptik wird auch die Dicke der Beleuchtungsebene entsprechend groß. Dies bedeutet, dass die optische Auflösung entlang der optischen Achse in Beobachtungsrichtung ebenfalls gering ist.

Durch Wechselwirkung des Anregungslichts mit der Probe entstehen allerdings Streuungs- und Absorbtionsartefakte, die sich als Streifen bzw. Schatten im Bild entlang der Beleuchtungsachse bemerkbar machen, was auch als "Curtain-Effekt" bezeichnet wird.

Ein Ansatz aus dem Stand der Technik zur Verringerung des Curtain-Effekts ist die mSPIM-Technik, gemäß welcher zusätzlich im telezentrischen Aufbau mit Hilfe eines resonanten Spiegels das Lightsheet so aus der optischen Achse verkippt wird, dass der Beleuchtungsstrahl aus unterschiedlichen Richtungen auf die Probe trifft, wodurch Streuungs- und Absorptionsartefakte reduziert werden. Einfach ausgedrückt werden durch die unterschiedlichen Richtungen die absorbierenden Bereiche innerhalb der Probe etwas hinterleuchtet, was die Streifen bzw. Schatten im Bild verringert. Nachteilig ist, dass diese Technik eine zusätzliche Komplexität mit sich bringt, insbesondere wenn das Lightsheet in z-Richtung gescannt werden soll, um ein dreidimensionales Bild zu erzeugen. Abgesehen davon wird damit immer noch nicht das Problem der geringen Flexibilität durch den vorgegebenen Fokus beseitigt.

Aus der deutschen Patentanmeldung mit der Veröffentlichungsnummer DE 102007045897 A1 ist ein SPIM-Mikroskop bekannt, bei welchem ein linienförmiger Beleuchtungs-Lichtstrahl gescannt wird.

Aus dem US-Patent 7,787,179 ist es bekannt, den Fokusbereich eines Lichtblattes durch eine Zoomoptik zu beeinflussen.

Aus der internationalen Patentanmeldung WO 2009/0124700 ein weiteres SPIM-Mikroskop bekannt, bei welchem ein linienförmiger Beleuchtungs-Lichtstrahl gescannt wird und die Signalerfassung durch einen synchron zum gescannten Lichtstrahl gerasterten Zeilendetektor erfolgt.

Ein konfokales Rastermikroskop mit einer Zoomoptik zum Beeinflussen des Beleuchtungsstrahls ist weiter aus dem britischen Patent GB 2416453 bekannt.

Es ist eine Aufgabe der Erfindung, die Flexibilität des eingangs beschriebenen Mikroskops zu erhöhen, um dabei eine höhere Auflösung und mehr Bilddaten erfassen zu können.

Dies wird gemäß der Erfindung durch die Merkmale im Patentanspruch 1 erreicht. Vorteilhafte Weiterbildungen sind in den Unteransprüchen beschrieben.

Gemäß einer bevorzugten Ausführungsform der Erfindung ist wenigstens ein Fotodetektor vorgesehen, welcher von dem Objekt entgegen der y-Richtung als eine zweite Detektionsrichtung ausgesendetes Detektionslicht in Form von Fluoreszenzlicht und/oder reflektiertem Licht erfasst. Dadurch entsteht ein zweiter Datenstrom, welcher beispielsweise zusätzlich zur Erzeugung eines konfokalen Bildes verwendet werden kann. Dieses optionale zusätzliche Bild kann wahlweise zugeschaltet oder abgeschaltet werden.

Bei Verwendung eines Multiphoton Lasers können sowohl über die konfokale Detektion als auch über den Non Descannenden Lichtweg Multiphotonen-Bilder aufgenommen werden. Der Non Descannende Detektionsweg hat den Vorteil der höheren Sammeleffizienz speziell bei dicken Proben. Unter dem Begriff Non Descannend versteht man eine Auskopplung des Detektionslichts direkt am Detektions-Objektiv.

Wird der SPIM Detektionsstrahlengang (in z-Richtung) für das Aufsammeln des Fluoreszenzlichtes verwendet und das Licht auf einen Photomultiplier oder einer APD oder APD Array gelenkt, wird eine deutlich höhere Effizienz erreicht als bei der Verwendung der Beleuchtungsoptik, da in der Regel die verwendete Numerische Apertur des Beleuchtungssystem geringer ist als vom Detektionssystem der SPIM Anordnung.

Gemäß einer weiteren bevorzugten Ausführungsform der Erfindung wird parallel zu dem in z-Richtung erfassten zweidimensionalen Weitfeldbild entsprechend der SPIM-Technik, welche ggf. mit einer Multiphoton-Beleuchtung ausgestaltet sein kann, konfokal ein eindimensionales Bild des Objekts erzeugt, welches eine sich in der x-Richtung ersteckende Linie aufspannt. Das zweidimensionale Bild bildet dann diejenige Beleuchtungsebene ab, welche von dem Lightsheet beleuchtet wird und wie oben beschrieben durch die Zoomoptik beeinflusst werden kann, während parallel dazu ein sogenanntes x-t-Bild erzeugt wird, das heißt ein Linienbild, welches insbesondere in biologischen Proben Aufschluss über die Bewegungsgeschwindigkeit von bestimmten Elementen in dem Objekt geben kann, beispielsweise über die Diffusion von Molekülen oder anderen Zellbestandteilen (Organellen).

Zur Erzeugung eines dreidimensionalen Bildes kann bevorzugt ein erster z-Scanner vorgesehen sein, welcher das Objekt in z-Richtung bewegt, so dass sequenziell mehrere in z-Richtung im Abstand zueinander angeordnete Lightsheets in jeweiligen Beleuchtungsebenen erzeugt werden, wobei ein optischer Abstand zwischen den jeweiligen Lightsheets und der Kamera konstant bleibt. Vorteil ist dabei, dass sowohl die gesamte Beleuchtungsoptik, als auch die SPIM-Detektionsoptik und die wahlweise zuschaltbare konfokale Detektionsoptik ortsfest bleiben, und darüber hinaus der Beleuchtungsstrahl nicht in z-Richtung durch einen Scanner ausgelenkt werden muss, womit sich die Beleuchtungsoptik vereinfacht. Alternativ ist es jedoch auch möglich, die Beleuchtungsoptik zu bewegen, oder den Beleuchtungsstrahl auszulenken, beispielsweise mittels eines Acousto Optical Deflectors (AOD) oder mittels eines Galvanometers. In diesem Falle sollte dann bevorzugt die SPIM-Detektionsoptik nachgerückt werden, was durch eine Veränderung der Lage des Objektivs der SPIM-Detektionsoptik oder die Verlagerung der gesamten SPIM-Detektionsoptik einschließlich der Kamera möglich ist.

Gemäß einer weiteren bevorzugten Ausführungsform der Erfindung ist eine Bildverarbeitungseinheit vorgesehen, welche sequenziell erzeugte Bilder, welche durch die jeweiligen in z-Richtung im Abstand zueinander angeordneten Lightsheets erzeugt wurden, zu einem dreidimensionalen Bild zusammensetzt.

Gemäß einer weiteren bevorzugten Ausführungsform der Erfindung wird parallel zu dem dreidimensionalen mittels der SPIM-Technik erfassten Bild konfokal (Multiphoton)ein zweidimensionales Bild des Objekts erzeugt, welches von der x-Richtung und z-Richtung aufgespannt wird.

Gemäß einer weiteren bevorzugten Ausführungsform ist ein zweiter z-Scanner vorgesehen, welcher den Beleuchtungs-Lichtstrahl in z-Richtung relativ zu dem Objekt bewegt, um sequenziell mehrere in z-Richtung im Abstand zueinander angeordnete Lightsheets zu erzeugen, und ein dritten z-Scanner ist vorgesehen, welcher den Detektionsstrahlengang entsprechend der Auslenkung des Beleuchtungs-Lichtstrahls in z-Richtung durch den zweiten z-Scanner nachführt, so dass ein Abstand zwischen dem Lightsheet und der Kamera konstant bleibt. Mit dem dadurch erzeugten Datenstrom lässt sich vorteilhaft von einer Bildverarbeitungseinheit, welche sequenziell erzeugt Bilder, welche den jeweiligen in z-Richtung im Abstand zueinander angeordneten Lightsheets zugeordnet werden können, durch verschiedene Render Methoden (Projection, Transparent, Shading, Ray tracing usw.) zu einem dreidimensionalen Bild zusammensetzen. Zusätzlich zu diesem durch Rendering erzeugten dreidimensionalen Bild kann vorteilhaft parallel dazu konfokal (Multiphoton) ein zweidimensionales Bild des Objekts erzeugt, welches von der x-Richtung und z-Richtung aufgespannt wird.

Soll ein größerer Objektbereich aufgenommen werden, kann über ein sogenanntes Stitching, d.h. aneinandersetzen von sequentiell aufgenommenen benachbarten Objektbereichen dies erreicht werden. Dabei wird das Objekt in x Richtung verschoben und ein neuer Bereich beleuchtet und mit der Kamera aufgenommen. Die Anzahl der Verschiebungen in der x-Richtung ist von der Objektgröße, der Feldgröße des Objektives, und den Kameraparametern abhängig. Denkbar ist auch das Objekt in der y-Richtung zu verschieben, um damit einen größeren Objektbereich zu erfassen. All diese Bilder können dann zu einem großen Gesamtbild vereint werden.

Durch die flexible optische Zoom-Einrichtung kann die Ausdehnung des Lightsheet (in y und z) entsprechend angepasst werden.

Möchte man nur eine dünne Ebene beleuchten, wird die Nummerische Apertur der Zoomoptik erhöht, hierbei wird aber die nutzbare Ausdehnung des Lightsheet verringert.

Durch das sequentielle Aufnehmen entlang der y-Richtung (Stitching) kann man Bildfolgen aufnehmen mit erhöhter Auflösung entlang z.

Da man die optischen Parameter der Zoomoptik kennt, kann man über geeignete Bildbearbeitung nur den Bereich verwenden und zusammensetzen der die erhöhte Auflösung umfasst.

Die Zoomoptik, welche die Fokuslänge des Beleuchtungs-Lichtstrahls variieren kann, kann gemäß einer bevorzugten Ausführungsform der Erfindung ein optischer Zoom sein, in welchem Linsengruppen relativ zueinander mechanisch verschoben werden. Mittels der Zoomoptik in Kombination mit dem Beleuchtungsobjektiv kann die Fokuslänge des Beleuchtungs-Lichtstrahls durch eine Veränderung der numerischen Apertur verlängert bzw. verkürzt werden, und damit ist die Länge des von dem Lightsheet ausgeleuchteten Feldes in der y-Beleuchtungsrichtung verlängerbar bzw. verkürzbar.

Gemäß einer weiteren bevorzugten Ausführungsform ist ein elektronischer Zoom vorgesehen, mittels welchem eine Scan-Länge in x-Richtung veränderbar ist. Vorteilhaft kann dabei die Anzahl von Bildpunkten in x-Richtung von dem elektronischen Zoom unabhängig von der eingestellten Scan-Länge in x-Richtung konstant gehalten werden. Wird die Scan-Länge in x-Richtung verringert, aber die Anzahl von gescannten Beleuchtungspunkten über diese kleinere Scan-Länge konstant gehalten, wird im konfokalen Fall bis zum Erreichen des Nyquist-Theorem die Auflösung gesteigert.

Wird gleichzeitig dazu konfokal ein Bild erzeugt, versteht sich, dass auch dieses Bild eine höhere Auflösung bis zum Erreichen des Nyquist-Theorem in x-Richtung bei kleinerem Ausmaß des Bildes in x-Richtung aufweist, was die Funktion eines elektronischen Zooms hat.

Gemäß einer bevorzugten Ausführungsform der Erfindung ist zusätzlich ein elektronischer Zoom vorgesehen, mittels welchem eine Scan-Länge in z-Richtung veränderbar ist, längs welcher eine Mehrzahl von im Abstand zueinander angeordnete Lightsheets sequenziell erzeugt werden. Hier gilt im Wesentlichen das Gleiche wie für den elektronischen Zoom in X-Richtung. Vorteilhaft kann entsprechend die gleiche Anzahl von in z-Richtung im Abstand zueinander angeordneten Lightsheets von dem elektronischen Zoom unabhängig von der eingestellten Scan-Länge in z-Richtung erzeugt werden.

Gemäß einer weiteren bevorzugten Ausführungsform wird der in x-Richtung gescannte Beleuchtungs-Lichtstrahl an oder in der Nähe seines Umkehrpunkts ausgeschaltet, an welchem eine maximale eingestellte Scan-Länge in x-Richtung erreicht ist. Damit lässt sich die Probe schonen, indem diese an den Umkehrpunkten einer geringeren Lichtbelastung ausgesetzt wird. Außerdem wird damit vermieden, dass das Bild am Umkehrpunkt besonders hell erscheint, weil die Beleuchtung über einen längeren Zeitpunkt im Verhältnis zu anderen Bereichen der Probe eingeschaltet wurde. Idealerweise folgt die Scan-Geschwindigkeit in x-Richtung in Abhängigkeit von dem Ort einer Sägezahnkurve. Bei hohen Scangeschwindigkeiten ist das allerdings etwas schwierig zu verwirklichen, so dass eine Sinuskurve gewählt wird, was an den Umkehrpunkten zu einer langsameren Scan-Geschwindigkeit als in der Mitte der Scanstrecke führt. Besonders bei einer Sinuskurve ist es sinnvoll, den Beleuchtungsstrahl in der Nähe des Umkehrpunkts auszuschalten.

Gemäß einer weiteren bevorzugten Ausführungsform der Erfindung ist die Kamera ein Flächendetektor, welcher aus der Gruppe CMOS-Kamera, CCD-Kamera oder Array-Detektoren ausgewählt ist. Weil es sich bei der SPIM-Technik um Weitfeldmikroskopie handelt, soll die Kamera eine Ortszuweisung für das Detektionslicht gewährleisten.

Gemäß einer weiteren bevorzugten Ausführungsform der Erfindung kann wahlweise ein Abregungsstrahl zugeschaltet werden, wozu eine Abregungslichtquelle vorgesehen ist, welche einen das sequentiell erzeugte Lightsheet in z-Richtung verdünnenden Abregungs-Lichtstrahl aus der y-Richtung auf das abzubildende Objekt sendet, wobei der Abregungs-Lichtstrahl in z-Richtung seitlich versetzt zum Beleuchtungs-Lichtstrahl auf das Objekt gesendet wird und parallel zu dem Beleuchtungs-Lichtstrahl in x-Richtung gescannt wird. Bevorzugt handelt sich um einen Abregungsstrahl, welcher in seinem Querschnitt so verändert wurde, dass dieser 2 Maxima aufweist, welche in z-Richtung gesehen vor und hinter dem Zentrum des Anregungsstrahls eine Nullstelle aufweist. Es ist jedoch auch möglich, zwei getrennte Laserstrahlen als Abregungsstrahlen vorzusehen, oder das Lightsheet auf nur einer Seite zu verdünnen, d.h. in z-Richtung gesehen nur entweder vor oder hinter dem Anregungsstrahl einen Abregungsstrahl anzuwenden.

Gemäß einer weiteren bevorzugten Ausführungsform der Erfindung ist ein Anregungs-Lichtstrahl-Modulator vorgesehen, mittels welchem der Anregungs-Lichtstrahl zu einem Besselbeam modulierbar ist. Ein Besselbeam weist eine inhomogene Intensitätsverteilung über den Strahl-Querschnitt auf, welche sich durch ein relativ scharfes Hauptmaximum und mehrere deutliche Nebenmaxima auszeichnet. Besonders bei Zuschaltung eines STED-Abregungsstrahls können diese Nebenmaxima durch Abregung unterdrückt werden, so dass das schmale Hauptmaximum im Zentrum des Anregungsstrahls übrig bleibt. Ein Besselbeam hat überdies auch noch den Vorteil, sich hinter einem relativ lichtundurchlässigen Abschnitt zum Teil neu zu formieren, womit der Curtain-Effekt weiter verringert werden kann.

Gemäß einer weiteren bevorzugten Ausführungsform der Erfindung ist die Beleuchtungsquelle ein gepulster Laser; der Beleuchtungs-Lichtstrahl ein Multiphoton-Laserstrahl ist; und entlang der z-Richtung wird ein Multiphoton-Signal detektiert wird. Der besondere Vorteil liegt darin, dass die SPIM-Detektionsoptik mit großer numerischer Apertur und damit großer Signalausbeute zur Erfassung des Multiphoton-Signals genutzt werden kann.

Gemäß einer weiteren bevorzugten Ausführungsform der Erfindung ist die Kamera eine schnelle Kamera, welche zusätzlich zu der Detektion des SPIM-Signals auch zur Detektion des Multiphoton-Signals ausgebildet ist. Schnelle Kameras können beispielsweise bis zu 1000 Bilder pro Sekunde im Format 512x512 erfassen.

Gemäß einer weiteren bevorzugten Ausführungsform der Erfindung ist ein umschaltbarer Spiegel vorgesehen mittels welchem das Multiphoton-Signal aus der z-Richtung auskoppelbar und auf einen Photodetektor lenkbar ist. Photodetektoren sind grundsätzlich schneller als Kameras, allerdings liefern diese keine Ortszuweisung, was allerdings auch nicht unbedingt erforderlich ist, weil über den Multiphoton-Beleuchtungsstrahl eine Ortszuweisung hergestellt werden kann, was besonders bei der Multiphoton-Beleuchtung gut möglich ist, weil bei dieser Beleuchtung ziemlich genau bekannt ist, welches kleine Volumen in dem Objekt gerade beleuchtet wird, während für die Signaldetektion deshalb Licht aus allen möglichen Richtungen detektiert werden kann.

Die Erfindung wird nachfolgend näher unter Bezugnahme auf die Zeichnung erläutert. In der Zeichnung zeigen:
Figur 1 eine schematische perspektivische Darstellung des Grundprinzips der SPIM-Technik nach dem Stand der Technik;
Figur 2 eine schematische Darstellung des Beleuchtungsstrahlengangs und des Detektionsstrahlengangs der SPIM-Technik nach dem Stand der Technik;
Figur 3 eine schematische Darstellung des erfindungsgemäßen Mikroskops;
Figur 4 eine schematische Darstellung des erfindungsgemäßen Mikroskops gemäß Figur 3 in der x-Scanrichtung betrachtet, einschließlich der Beleuchtungs- und Detektionsstrahlengänge;
Figur 5 eine schematische Darstellung des in Figur 4 gezeigten Mikroskops, aber in y-Beleuchtungsrichtung betrachtet;
Figur 6 eine schematische Darstellung, welche das STED-Prinzip nach dem Stand der Technik veranschaulicht;
Figur 7 eine schematische Darstellung, welche die Modulation des STED-Abregungsstrahls mittels einer Phasenplatte veranschaulicht;
Figur 8a den Anregungsstrahl im Querschnitt sowie die zugehörige Intensitätsverteilung mit den Koordinaten x, y und z.
Figur 8b den Anregungsstrahl plus den Abregungsstrahl im Verhältnis zueinander sowie das durch Scannen in x-Richtung erzeugte sequenzielle Lightsheet zusammen mit zugehörigen Intensitätsverteilungen mit den Koordinaten x, y und z.
Fig. 9 eine schematische Darstellung einer weiteren Ausführungsform der Erfindung, bei welcher die SPIM-Detektionsoptik zusätzlich zu einer Multiphoton-Signals genutzt wird.

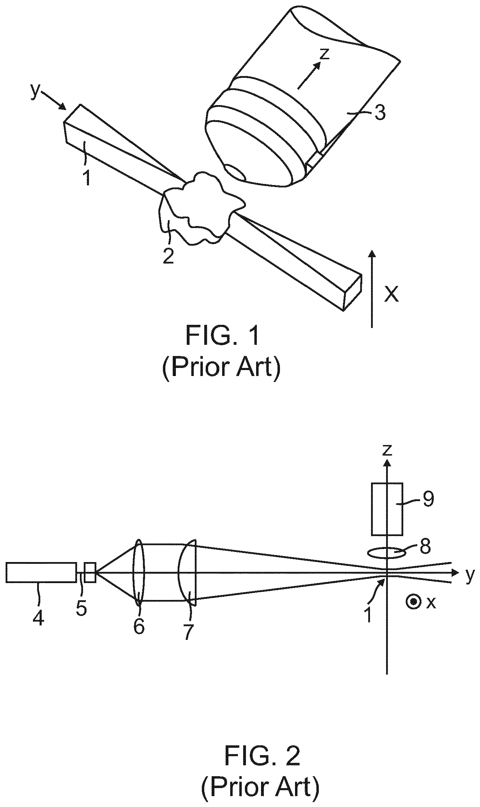

Die Figur 1 zeigt sehr stark vereinfacht das Prinzip eines SPIM-Mikroskops nach dem Stand der Technik, welches nach der sogenannten "Selective Plane Imaging" Technologie arbeitet. Die Beleuchtung erfolgt in einer y-Richtung in Form eines Lightsheets, um in einem Objekt 2 eine bestimmte Ebene zu beleuchten. Die Detektionsrichtung erstreckt sich im Wesentlichen senkrecht zum Lightsheet 1, das heißt in z-Richtung, wobei die Detektion des Detektionslichts mittels eines Objektivs 3 erfolgt. Wie in Figur 1 dargestellt, soll das Lightsheet 1 im Bereich eines inneren Abschnitts des Objekts 2 besonders dünn ausgebildet sein, um eine hohe Auflösung in z-Richtung zu erreichen. Eine hohe Auflösung wird erreicht, indem das Lightsheet 1 innerhalb des Objekts einen engen Fokus aufweist.

Wie weiter unten genauer erläutert wird, kann dieser Fokus in seiner Länge beeinflusst werden, womit das beobachtete Feld größer wird, allerdings auf Kosten der Schärfe des Fokus und damit der Dünne des Lightsheets 1 und somit auf Kosten der Auflösung des Bildes in z-Richtung. Je nach Anwendung kann es jedoch sinnvoll sein, keine allzu hohe Auflösung in z-Richtung einzustellen, aber dafür gleichzeitig ein größeres Feld und ein größeres Beobachtungsvolumen aufgrund eines dickeren Lightsheets zu erfassen. Ein größeres Beobachtungsvolumen kann auch dann sinnvoll sein, wenn in dem erzeugten Bild immer noch die interessierenden Aspekte des Bildes gut genug zu erkennen sind, aber gleichzeitig ein größeres Beobachtungsvolumen insoweit von Vorteil ist, dass damit leichter zu gewährleisten ist, dass das Beobachtungsvolumen auch wirklich den gesuchten Aspekt beinhaltet. Soll dann ein noch höher aufgelöstes Bild von dem interessierenden Aspekt erzeugt werden, kann der Fokus des sequenziell erzeugten Lightsheets 1 dann durch die Zoom-Optik kleiner aber schärfer eingestellt werden.

Im Gegensatz zur konfokalen Scan-Mikroskopie erfordert die Detektion des Detektionslichts in z-Richtung nach der SPIM-Technik eine Ortszuweisung, da es sich um WeitfeldMikroskopie handelt. Diese Ortszuweisung wird üblicherweise mit einer Kamera erzeugt, beispielsweise einer CCD-Kamera oder CMOS-Kamera. Will man mittels der SPIM-Technologie ein dreidimensionales Bild des Objekts 2 erzeugen, kann das Lightsheet 1 in z-Richtung gescannt werden und die aus den jeweiligen Beleuchtungsebenen gewonnenen Bilder können zu einem dreidimensionalen Bild zusammengesetzt werden. Diesen Bildverarbeitungsvorgang nennt man auch "Rendering", hier in z-Richtung.

In Figur 2 ist ein herkömmlicher Beleuchtungs-Strahlengang eines SPIM-Mikroskops schematisch dargestellt. Ein Laser 4 erzeugt einen Beleuchtungs-Lichtstrahl 5, welcher von einem Strahlaufweiter auf eine Kollimatorlinse 6 gesendet wird, welcher eine Zylinderlinse 7 nachgeschaltet ist, welche das Lightsheet 1 auf das Objekt fokussiert. Eine Objektivlinse sammelt das Detektionslicht und richtet es in eine Kamera 9. Der Fokus des Lightsheets kann durch Verschieben von Linsenbaugruppe verändert werden, in diesem stark vereinfachten Beispiel gemäß Figur 2 durch eine Verschiebung der Zylinderlinse 7 relativ zu der Kollimatorlinse 6.

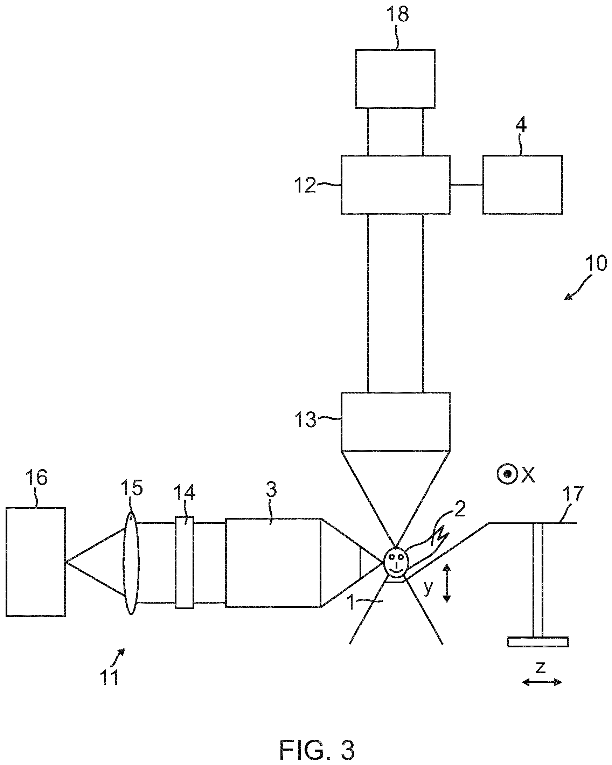

Figur 3 zeigt den schematischen Aufbau des erfindungsgemäßen SPIM-Mikroskops, wobei ein Beleuchtungsoptik-Strahlengang mit dem Bezugszeichen 10 bezeichnet ist, und ein SPIM-Detektionslicht-Strahlengang mit dem Bezugszeichen 11 bezeichnet ist. Der Beleuchtungsoptik-Strahlengang 10 hat außerdem die Funktion eines konfokalen Detektionslicht-Strahlengangs, nur in umgekehrter Richtung im Vergleich zur Beleuchtungsrichtung.

Zunächst wird der Beleuchtungsoptik-Strahlengang erläutert; Ein Laser 4 erzeugt Beleuchtungslicht, welches über einen Scanner 12 einer Zoom-Optik 13 zugeführt wird. Der Scanner 12 erzeugt ein sequenzielles Lightsheet 1, mittels welchem das Objekt 2 beleuchtet wird. Zum sequenziellen Erzeugen des Lightsheets 1 wird der vom Laser 4 erzeugte Beleuchtungs-Laserstrahl in einer x-Richtung gescannt, das heißt gemäß Figur 3 aus der Zeichenebene heraus bzw. in die Zeichenebene hinein. Der Laserstrahl kann dazu beispielsweise einen kreisrunden Querschnitt aufweisen, aber alternativ auch in seiner Querschnittsform moduliert sein, beispielsweise einen ovale Querschnitt aufweisen, wobei sich die längere Achse des ovalen Querschnitts in x-Richtung erstreckt. Ebenso kann der Beleuchtungs-Laserstrahl beispielsweise rechteckig sein, oder jede andere beliebige Form aufweisen.

Der SPIM-Detektionslicht-Strahlengang 11 erstreckt sich in z-Richtung, das heißt im Wesentlichen senkrecht zur y-Richtung, in welcher sich der Beleuchtungs-Strahlengang 10 erstreckt. Es kann von Vorteil sein, leicht von dem senkrechten Beziehung zwischen dem Beleuchtungsstrahlengang und Detektionsstrahlengang abzuweichen, d.h. kleinere oder größere Winkel als 90° zwischen den beiden Strahlengängen zu wählen, beispielsweise um Teile oder Partikel innerhalb des Objektes etwas zu hinterleuchten. Es können auch mehrere Bilder mit unterschiedlichen Winkels aufgenommen und zusammengesetzt werden, was man auch als mSPIM-Technik bezeichnet. Nachfolgend wird der Einfachheit halber von einer rechtwinkligen Beziehung ausgegangen, welche auch abweichende Winkel mit umfassen soll, wobei diese aber in einem einigermaßen engen Bereich um die 90° zu verstehen sind. Das Detektionslicht, welches von dem Objekt 2 entweder durch Reflexion oder bevorzugt Fluoreszenzlicht-Emissionen ausgeht, wird von dem Objektiv 3 erfasst. Besonders bei Mehrfarben-Detektion ist hinter das Objektiv ein Farbfilter 14 geschaltet, welcher nach Bedarf Detektionslicht bestimmter Wellenlängen herausgefiltert, welches dann über eine Tubuslinse 15 einer Kamera 16 zugeführt wird, beispielsweise einer CCD-Kamera 16.

Zur Erzeugung eines dreidimensionalen Bildes kann ein Objektträger 17 in z-Richtung gescannt werden, um sequenziell verschiedene Beleuchtungsebenen in dem Objekt 2 zu beleuchten, wovon jede Beleuchtungsebene ihrerseits durch einen in x-Richtung gescannten Laserstrahl und ein dadurch in der jeweiligen Ebene erzeugtes sequenzielles Lightsheet 1 beleuchtet wird. Die Mehrzahl von in z-Richtung benachbarten, jeweils sequenziell aufgebauten Lightsheets 1 können dann durch "Rendering" in z-Richtung zu einem dreidimensionalen Bild zusammengesetzt werden.

Für den Fall, dass dreidimensionale Bilder durch "Rendering" mit z-Trieb erzeugt werden sollen, liegt im Bewegen des Objekts 2 ein Vorteil darin, dass dann der Abstand zwischen den jeweiligen benachbarten Beleuchtungsebenen im Inneren des Objekts und dem Objektiv immer gleich bleibt, weil weder die Lage des Beleuchtungsstrahls, noch der Kamera 16 verändert wird. Alternativ ist es allerdings auch möglich, das Lightsheet 1 in z-Richtung zu scannen, beispielsweise durch ein Galvanometer. Allerdings muss dann das Objektiv 3 nachgerückt werden, damit der Abstand zwischen der jeweiligen Beleuchtungsebene und dem Objektiv konstant bleibt. Alternativ könnte natürlich auch die gesamte SPIM-Detektions-Optik nachgerückt werden, welche das Objektiv 3, den Filter 14, die Tubuslinse 15 und die Kamera 16 beinhaltet.

Der Beleuchtungsoptik-Strahlengang 10 kam wie bereits erwähnt außerdem die Funktion eines konfokalen Detektionslicht-Strahlengangs aufweisen, wozu der Detektor 18 vorgesehen sein kann, der von dem Objekt 2 in y-Richtung reflektiertes und/oder emittiertes Fluoreszenzlicht erfasst. Gleichzeitig mit der Bilddetektion über den SPIM-Detektionslicht-Strahlengang 11 ist damit auch parallel eine konfokale Bilddetektion möglich, weil das Lightsheet 1 sequenziell durch Scannen in x-Richtung aufgebaut wird. Das konfokal erzeugte Bild ist eine Dimension geringer als das mittels der SPIM-Detektion erfasste Bild. Wird beispielsweise nur ein zweidimensionales Bild mittels der SPIM-Detektion erfasst, also ein Bild in nur einer Beleuchtungsebene, wird gleichzeitig konfokal ein sogenanntes x-t Bild erfasst, das heißt ein eindimensionales Linienbild. Das kann beispielsweise zur Ermittlung der Diffusionsgeschwindigkeit von bestimmten Molekülen nützlich sein, welche mit einem Marker markiert sein können oder eingefärbt sein können, um Fluoreszenzlicht zu emittieren, während das simultan betrachtete zweidimensionale SPIM-Bild andere Aufschlüsse geben kann, beispielsweise welche Moleküle sich mit welchen anderen Molekülen wo in der betrachteten Beleuchtungsebene in dem Objekt verbinden.

Entsprechendes gilt für den Fall, dass mittels der SPIM-Detektion ein dreidimensionales Bild mit dem z-Trieb aufgebaut wird, d.h. dass dann parallel dazu konfokal ein zweidimensionales Bild erfasst wird. So kann beispielsweise ermittelt werden, welche Moleküle sich räumlich gesehen wo innerhalb des Objekts miteinander verbinden, während parallel die Diffusionsgeschwindigkeit von Molekülen durch bestimmte Ebenen erfasst werden kann. Die simultane Detektion eines SPIM-Bildes mit der Dimension "n" und ein parallel dazu konfokal erfasstes Bild mit der Dimension "n-1" lässt daher in Zusammenschau zusätzliche Aufschlüsse zu, beispielsweise zusätzliche Geschwindigkeits-Information zu, mit welcher einzelne Elemente, beispielsweise Moleküle oder andere Elemente, sich innerhalb des Objekts 2 bewegen. Dies findet insbesondere in der Mikroskopie von lebenden Organismen neue Anwendungsgebiete.

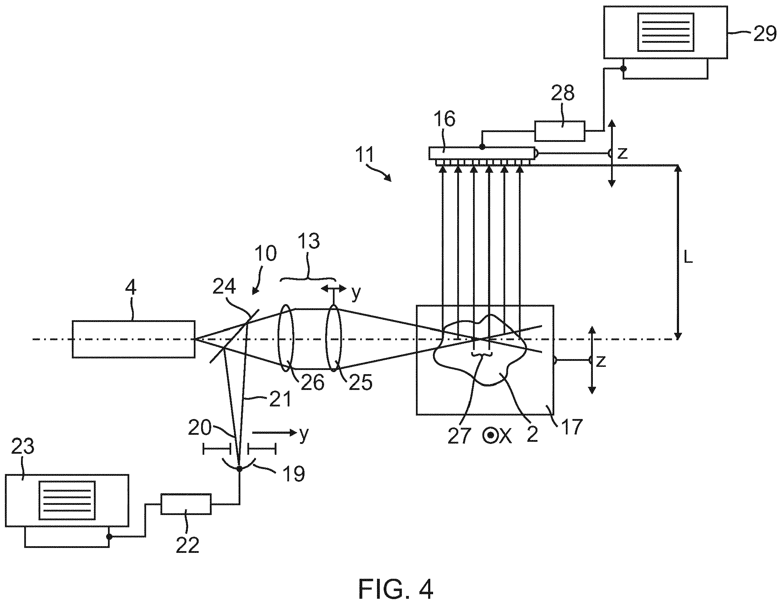

Figur 4 zeigt ein weiteres Ausführungsbeispiel der Erfindung. Gleiche Elemente sind mit gleichen Bezugszeichen bezeichnet wie in den vorangehenden Figuren. So ist auch hier der SPIM-Detektionslicht-Strahlengang mit dem Bezugszeichen 11 bezeichnet, während der Beleuchtungs-Strahlengang mit dem Bezugszeichen 10 bezeichnet ist. Auch in diesem Ausführungsbeispiel gemäß Figur 4 dient der Beleuchtungs-Strahlengang 10 zusätzlich als konfokaler Detektions-Strahlengang, wobei die Signaldetektion durch eine Fotodiode 19 erfolgt, welche durch eine Apertur 20 konfokal Detektionslicht 21 empfängt, und ein entsprechendes Signal über eine Bildverarbeitungseinheit 22 in einen Monitor 23 einspeist. Das Detektionslicht wird mittels eines dichroitischen Spiegels 24 zu der Fotodiode 19 hin abgelenkt. Anstelle der Fotodiode 19 können auch andere Lichtsensoren, beispielsweise Avalanche-Dioden, Photomultiplier oder eine Kamera vorgesehen sein. Da es sich um eine konfokale Bilddetektion handelt, ist jedoch keine Ortszuweisung erforderlich, weil diese Ortszuweisungs-Information über den gescannten Beleuchtungs-Lichtstrahl vorhanden ist, das heißt es ist bekannt, welcher Bildpunkt des Objekts gerade eben beleuchtet wurde, und entsprechend ist auch bekannt, dass das kurz darauf von der Fotodiode empfangene Signal diesem Bildpunkt zuzuordnen ist. Der Aufwand für eine Kamera ist daher für die konfokale Detektion nicht erforderlich.

Zur Veränderung des Fokus des sequenziell erzeugten Lightsheets 1 lässt sich eine Zoom-Linse 25 relativ zu einer weiteren Linse 26 in y-Richtung verschieben. In der Praxis wird es sich um eine Linsengruppe handeln, der Einfachheit halber ist jedoch hier exemplarisch eine Zoom-Linse 25 dargestellt. Die Zoom-Optik 13 in Kombination mit dem Beleuchtungsobjektiv (Makroobjektiv) stellt somit einen optischen Zoom bereit, mittels welchem ein Fokusbereich 27 in seiner Länge veränderbar ist. Hierzu gilt, je schärfer der Fokus, desto kürzer die brauchbare Fokuslänge, aber gleichzeitig desto dünner das Lightsheet 1 in diesem Fokusbereich 27. Der Einfachheit der Darstellung halber wurde die Details der SPIM-Detektions-Optik in der Darstellung gemäß Figur 4 weggelassen, wie diese Optik beispielsweise in Figur 3 dargestellt das Objektiv 3, den Filter 14, und die Tubuslinse 15 aufweist. Die schematisch dargestellte CCD-Kamera 16 stellt eine Ortszuweisung in der x-y-Ebene für das in z-Richtung empfange Detektionslicht bereit. Über eine SPIM-Bildverarbeitungseinheit 28 werden die von der CCD-Kamera empfangenen Signale verarbeitet und an den SPIM-Monitor 29 weitergeleitet. Sollen unterschiedliche Ebenen in dem Objekt 2 beleuchtet werden, kann der Objektträger 17 in z-Richtung bewegt werden. Wie in dieser Darstellung gemäß Figur 4 deutlich zu erkennen ist, würde die Länge L, das heißt der Abstand zwischen der Beleuchtungsebene und der CCD-Kamera, dabei immer konstant bleiben. Wie bereits anhand von Figur 3 erläutert, ist es aber auch möglich, den Beleuchtungsstrahl in z-Richtung bei ortsfestem Objekt 2 zu verlagern, und stattdessen die Position der CCD-Kamera zu verändern, oder eventuell leichter zu realisieren, die Lage des Objektivs 3 relativ zu der CCD-Kamera 16 zu verändern.

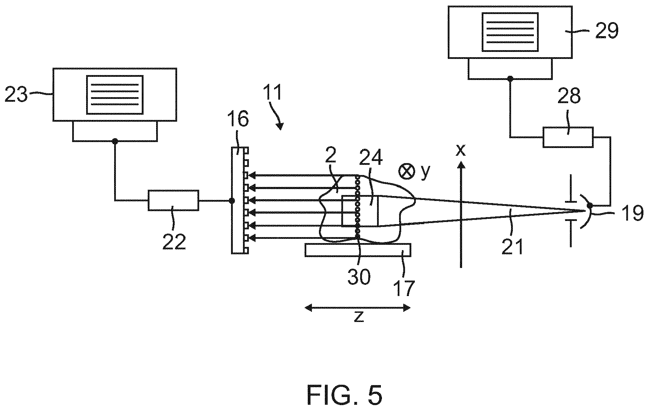

Die Figur 5 zeigt das in Figur 4 dargestellte Ausführungsbeispiel, allerdings in einer anderen Beobachtungsrichtung, nämlich in Richtung des Beleuchtungsstrahls, das heißt in y-Richtung gesehen. Gezeigt sind hier insbesondere die einzelnen Bildpunkte 30, welche in x-Richtung gescannt werden, um so sequenziell das Lightsheet 1 zu erzeugen. Der dichroitische Spiegel 24 dient zum Ablenken des Detektionslichts zu der Fotodiode 19. Der Objektträger 17 kann in z-Richtung gescannt werden, das heißt zu der CCD-Kamera 16 hin bewegt bzw. von dieser weg bewegt werden, um unterschiedliche Beleuchtungsebenen in dem Objekt 2 zu beleuchten.

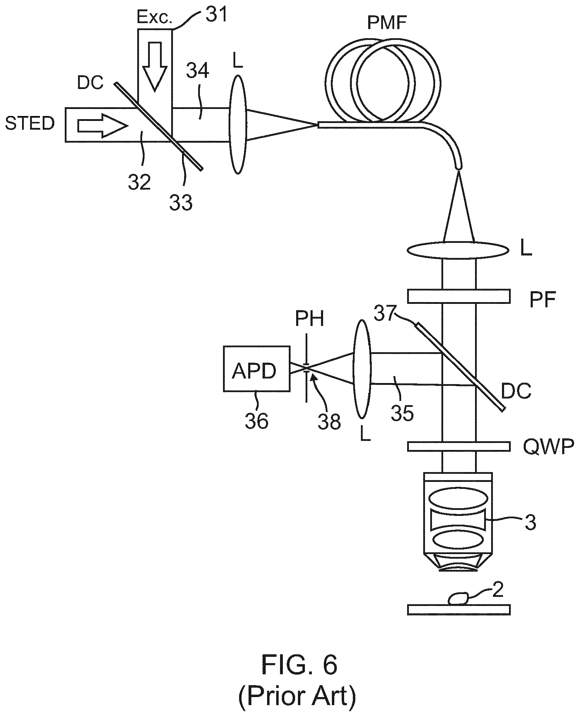

Das Lightsheet 1 kann auch durch die Anwendung von STED (Stimulated Emission Depletion) weiter verjüngt werden, das heißt dünner gestaltet werden, um eine höhere Auflösung in z-Richtung zu erreichen. Der aus dem Stand der Technik bekannte grundsätzliche Aufbau eines STED-Mikroskops ist in Figur 6 gezeigt. Ein Anregungsstrahl 31 und ein Abregungsstrahl 32 werden mittels eines Strahlvereinigers, hier beispielsweise mittels eines dichroitischen Filters, zu einem gemeinsamen Strahlengang 34 vereinigt, welcher durch ein Objektiv 3 auf ein Objekt 2 gerichtet wird. Mehrere andere optische Elemente können zwischengeschaltet sein, beispielsweise Linsen, lichtleitende Fasern, oder Farbfilter. Der Abregungsstrahl wird üblicherweise in seiner Intensitätsverteilung in seiner Phase moduliert, was beispielsweise durch Phasenplatten erfolgen kann, aber auch durch geeignet gestaltete Linsen. Die Modulation erfolgt so, dass der Abregungsstrahl in seiner Mitte eine Nullstelle aufweist, das heißt eine Intensität von Null oder zumindest eine sehr geringe Intensität, während ringsum möglichst gleichmäßiges, ringförmiges Intensitätsmaximum vorliegt. Die für die Fluoreszenz-Mikroskopie verwendeten Farbstoffe reagieren auf eine bevorzugte Anregungswellenlänge und Abregungswellenlänge, bei welcher sich Fluoreszenz besonders gut anregen bzw. abregen lässt. Üblicherweise sind Anregungs- und Abregungs-Wellenlängen unterschiedlich und der Anregungsstrahl und Abregungsstrahl werden für den jeweiligen Bildpunkt zeitversetzt auf das Objekt gesendet. Durch die Anregung lässt sich ein Bildpunkt bestimmter Größe zur Fluoreszenz anregen, um kurz darauf rings des Anregungszentrums abgeregt zu werden, wodurch sich der Fluoreszenzlicht emittierende Bildpunkt des Objekts 2 zu einem kleineren Bildpunkt einengen lässt, um damit die Auflösung zu erhöhen. Bei Mehrfarben-Fluoreszenzmikroskopie verwendet man unterschiedliche Farbstoffe, welche sich dadurch unterscheiden, dass diese auf unterschiedliche Anregungswellenlängen reagieren, d.h. durch Anregungslicht unterschiedlicher Wellenlängen besonders stark zur Fluoreszenz angeregt werden.

Bevorzugt wählt man diese Farbstoffkombination aber auch so aus, dass diese durch eine gemeinsame, gleiche Abregungswellenlänge besonders gut abgeregt werden, so dass vermieden wird, unterschiedliche Abregungs-Wellenlängen bereitstellen zu müssen.

Das Detektionslicht 35, welches von dem Objekt 2 durch das Objektiv 3 zurückgesendet wird, kann von einem Strahlteiler, hier ebenfalls ein dichroitischer Spiegel 37, durch eine Linse und geeignete Apertur 38 zum Eliminieren von Streulicht auf einen Fotodetektor 36 gesendet werden.

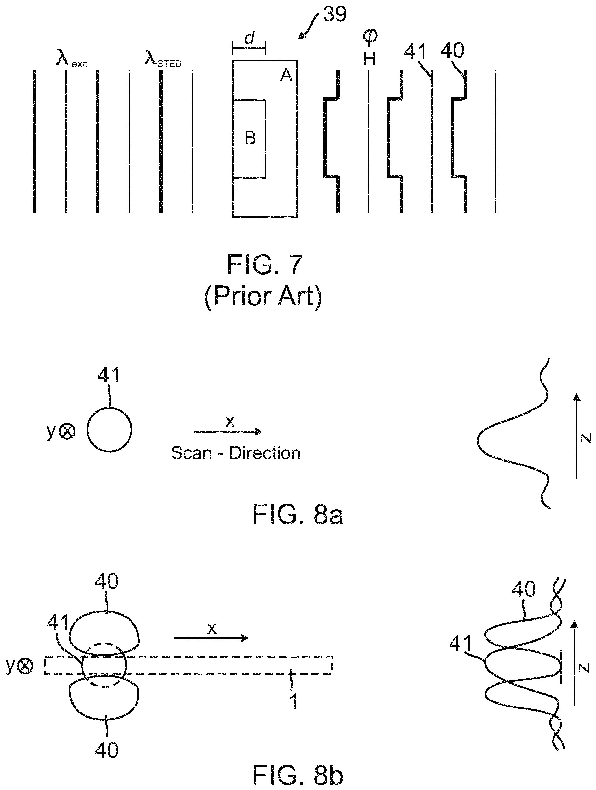

Die Modulation des Abregungsstrahls 40 mittels einer Phasenplatte 39 ist in Figur 7 dargestellt. Sowohl die Phase, als auch die Intensitätsverteilung lässt sich mit derartigen Phasenplatten 39 modulieren. Dabei ist die Phasenplatte derart gestaltet, dass zwar der Abregungsstrahl 40 moduliert wird, nicht aber der Anregungsstrahl 41, d.h. die Modulation erfolgt in Abhängigkeit von der Wellenlänge, welche für den Abregungsstrahl 40 unterschiedlich im Vergleich zum Anregungsstrahl 41 ist.

Es versteht sich, dass sich das STED-Prinzip auch in den Beleuchtungs-Strahlengang 10 einbauen lässt, wie dieser in Figur 4 dargestellt ist. Zusätzlich zu dem Laser 4 für das Beleuchtungslicht, welches in diesem Falle dem Anregungslicht gleichkommt, lässt sich ein weiterer Laser zur Erzeugung des Abregungslichts vorsehen. Ein Anregungsstrahl und ein Abregungsstrahl lassen sich entweder zu einem Strahlengang vereinigen, wie dies in Figur 6 dargestellt ist, oder der Abregungsstrahl kann einem separaten Strahlengang folgen. Grundsätzlich ist es auch möglich, den Anregungsstrahl und den Abregungsstrahl mit nur einem einzigen Laser 4 (Weisslichtlaser) zu erzeugen. Zu diesem Zweck kann der Strahl geteilt werden, und ein Teil des Strahls kann durch ein Acousto Optical Element wie beispielsweise einen Acousto Optical Tunable Filter (AOTF) in seiner Wellenlänge selektiert werden. Bei Verwendung von gepulsten Lasern kann ein Zeitversatz zwischen Anregungs- und Abregungsstrahl auch durch sogenannte Delay Stage bereitgestellt werden.

Eine Ausführungsform ist in den Figuren 8a und 8b dargestellt. Figur 8a zeigt einen kreisrunden Anregungsstrahl 41 im Querschnitt. Die Richtungen x, y und z, wie sie in den Figuren 4 und 5 eingezeichnet sind, sind auch in den Figuren 8a und 8b eingezeichnet. Ein Intensitätsprofil des Anregungsstrahls ist auf der rechten Seite gezeigt, und folgt üblicherweise einer gaußschen Verteilung - abgesehen von relativ kleinen Nebenmaxima aufgrund von Beugung. Figur 8b zeigt einen Abregungsstrahl 40, welcher so moduliert wurde, dass dieser beidseitig des Anregungsstrahls 41 ein Intensitätsmaximum aufweist, sowie eine dazwischen befindliche Nullstelle aufweist, in welcher die Intensität Null oder zumindest äußerst gering ist. Wie in Figur 8b auch zu erkennen ist, sind die beidseitig der Nullstelle angeordneten Intensitätsmaxima des Abregungsstrahls 40 in ihrem Querschnitt nicht kreisrund, sondern weisen in ihrem Querschnitt in einem dem Zentrum des Anregungsstrahls zugewandten Abschnitt eine flachere Krümmung auf als auf ihrer dem Anregungszentrum abgewandten Seite. Als sequenziell erzeugtes Lightsheet 1, welches in Figur 8b gestrichelte eingezeichnet ist, bleibt dann ein schmaleres Band in dem zentralen Bereich übrig, in welchem das Abregungslicht die Fluoreszenz nicht abgeregt hat. Rechts neben den Querschnitten von Anregungsstrahl 41, Abregungsstrahl 40, und sequenziell erzeugtem Lightsheet 1, sind die Intensitätsverteilung des Anregungsstrahls 41 und des Abregungsstrahls 40 in Figur 8b dargestellt.

Der STED-Abregungsstrahl lässt sich wahlweise zuschalten oder abschalten, was auch zeilenweise oder pixelweise in x Richtung möglich ist. Da die Information vorliegt, wann der Abregungsstrahl zu- bzw. abgeschaltet ist, lassen sich die entsprechenden Datenströme trennen, d.h. in einen ersten Datenstrom zur Erzeugung eines Bildes aufgrund eines dicken Lightsheets und dementsprechend mit einer größeren Beleuchtungsfläche (auf den Querschnitt des Beleuchtungsfokus bezogen) und einem größerem Beleuchtungsvolumen und einen zweiten Datenstrom zur Erzeugung eines Bildes aufgrund eines dünneren Lightsheets mit einer kleineren Beleuchtungsfläche (auf den Querschnitt des Beleuchtungsfokus bezogen) und einem kleineren Beleuchtungsvolumen. Somit lassen sich simultan ein in z-Richtung hochauflösendes Bild unter Zuschaltung von dem STED-Strahl erzeugen, und ein in z-Richtung weniger hochauflösendes Bild ohne Zuschaltung des STED-Strahls erzeugen, welches allerdings den Vorteil hat, ein größeres Volumen im Inneren des Objekts zu beleuchten.

Unabhängig von der Zu- oder Abschaltung des STED-Strahls lässt sich mit diesem Mikroskop parallel ein SPIM-Mikroskopie-Bild der Dimension n und ein konfokal erzeugtes Bild der Dimension n-1 erzeugen, wobei diese Bilder wahlweise oder auch parallel in z-Richtung hochauflösend oder weniger hochauflösende durch Zu- oder Abschalten des STED-Strahls erzeugt werden können. Insgesamt lassen sich also gleichzeitig 4 separate Datenströme erzeugen, welche die folgenden Datensätze erzeugen können:
i) 3-dimensionaler Datensatz (SPIM) hochauflösend, aber Abbildung kleineres Volumen des Objekts;
ii) 3-dimensionales Datensatz (SPIM) geringer auflösend, aber Abbildung größeres Volumen des Objekts;
iii) 2-dimensonales konfokales Bild in z-Richtung hochauflösend; und
iv) 2-dimensionales konfokales Bild in z-Richtung geringer auflösend.

Wenn nur eine Ebene mit dem Lightsheet ausgeleuchtet werden soll, dann lassen sich gleichzeitig die folgenden Bilder erzeugen:
i) 2-dimensionales Bild (SPIM) hochauflösend, aber kleineres Volumen des Objekts;
ii) 2-dimensionales Bild (SPIM) geringer auflösend, aber größeres Volumen des Objekts;
iii) 1-dimensonales konfokales Bild x-t in z-Richtung hochauflösend; und
iv) 1-dimensionales konfokales Bild x-t in z-Richtung geringer auflösend.

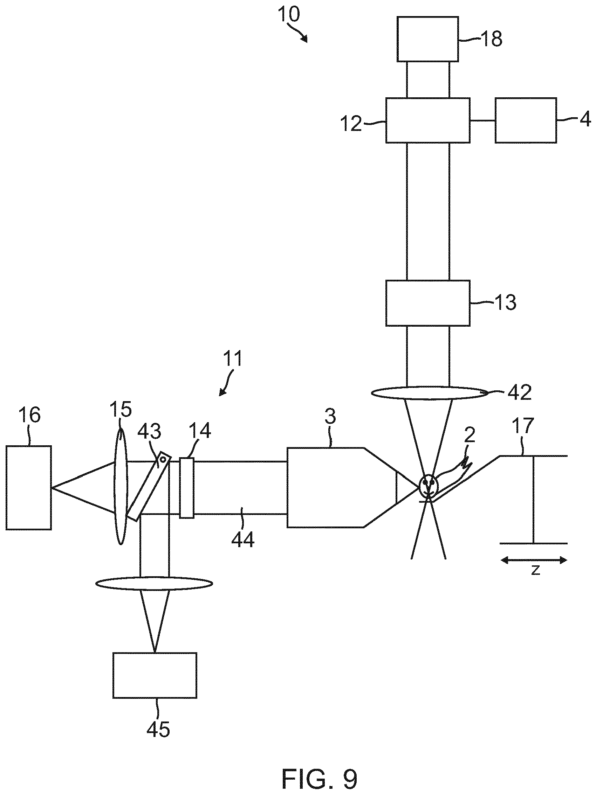

Die Anzahl der Lightsheets in z-Richtung ist nicht abhängig von der x-Dimension, man kann also unterschiedliche Bildformate angeben, z.B. Anzahl der Bildpunkte in x-Richtung 512, die in z-Richtung können mehr oder weniger sein. Um einen möglichst lückenlosen Datensatz in z-Richtung zu bekommen, muss man den Vorschub in z-Richtung möglichst so wählen, dass immer ein gewisser Überlapp (Nyquist Theorem) vorhanden ist. Figur 9 zeigt eine weitere Ausführungsform der Erfindung, wobei gleiche Bauelemente im Vergleich zu dem Ausführungsbeispiel gemäß Figur 3 mit gleichen Bezugszeichen bezeichnet sind. Zusätzlich dargestellt ist ein Beleuchtungsobjektiv 42, welches zusätzlich zu der Zoomoptik 13 vorgesehen sein kann. Das Beleuchtungsobjektiv kann allerdings auch Teil des optischen Zooms sein, wie dies zum Beispiel in dem Ausführungsbeispiel gemäß Figur 4 der Fall ist.

Im Gegensatz zur Beleuchtung mit einem kontinuierlichen Laser (continuous wave CW) wird bei der Multiphoton-Fluoreszenz-Mikroskopie ein gepulster Laser verwendet, welcher langwellige Anregungs-Photonen sendet, welche eine relativ niedrige Energie haben und damit besonders probenschonend sind, was insbesondere bei biologischen Proben wichtig ist. Ebenso wie die Detektion des SPIM-Signals kann auch mit einem umschaltbaren Spiegel 43 aus dem in z-Richtung verlaufenden Detektions-Strahlengang 44 ein Multiphoton-Signal ausgekoppelt werden und von einem Photomultiplier oder einer Avalanche Photodiode 45 erfasst werden. Im Übrigen wird das SPIM-Signal von der Kamera 16 wie bereits anhand von Figur 3 beschrieben erfasst.

Sofern die Kamera 16 schnell genug arbeitet, ist es als eine Untervariante zu dem in Figur 9 dargestellten Ausführungsbeispiel auch möglich, auf den umschaltbaren Spiegel 43 zu verzichten und stattdessen die Kamera 16 zur Erfassung des Multiphoton-Signals zu verwenden. Da bei einer Multiphoton-Beleuchtung mit einer Erfassung des Signals in z-Richtung, das heißt senkrecht zur Beleuchtungsrichtung, für jeden Beleuchtungspunkt auf dem Objekt auf der Kamera 16 eine Linie abgebildet wird, und durch den Scanner-Vorgang in x-Richtung sequenziell für eine Scan-Linie auf dem Objekt, die sich in x-Richtung erstreckt, auf der Kamera 16 sequenziell eine Fläche beleuchtet wird, muss softwaretechnisch eine Datenreduktion erfolgen, welche diese beleuchtete Fläche auf die Abbildung einer Linie zurückführt. Durch ein Scannen in z-Richtung können dann sequenziell mehrere Linien auf dem Objekt erfasst werden, welche zu einem Flächenbild des Objekts weiterverarbeitet werden können.

In einfachen Worten ausgedrückt wird gemäß dieser Untervariante der SPIM-Signalerfassungs-Aufbau zu einer Multiphoton-Signalerfassung verwendet, was mit schnellen Kameras möglich ist, welche beispielsweise bis zu 1000 Bilder pro Sekunde im Format 512x512 erfassen können.

Ein besonderer Vorteil den SPIM-Signalerfassungs-Aufbau für die Multiphoto-Signalerfassung zu verwenden liegt in einer deutlich gesteigerten Signalausbeute, was unter anderem auf folgenden Zusammenhang zurückzuführen ist: Bei der Lightsheet-Erzeugung verwendet man typischerweise Beleuchtungsobjektive mit geringer numerischer Apertur, beispielsweise Verwendung eines 1x Objektivs im Bereich von 0.04 NA. Verwendet man nun den SPIM Detektionsweg zur Detektion des erzeugten Signals in der Multiphoton Beleuchtung kann man deutlich höhere Signalausbeuten erzielen, da die verwendeten Objektive eine viel höhere numerische Apertur (NA) besitzen (beispielsweise um 1.0 NA). Dies bedeutet einen Signalgewinn von mehr als einem Faktor 20.

Wird der SPIM Detektionsstrahlengang (in z-Richtung) für das Aufsammeln des Fluoreszenzlichtes verwendet und das Licht auf einen Photomultiplier oder einer APD oder APD Array oder gemäß der oben beschriebenen Untervariante direkt auf eine schnelle Kamera gelenkt, wird eine deutlich höhere Effizienz erreicht als bei der Verwendung der Beleuchtungsoptik zur Signalerfassung in y-Richtung, da in der Regel die verwendete numerische Apertur des Beleuchtungssystems geringer ist als die des Detektionssystems der SPIM Anordnung.

Die Verwendung von Multiphoton hat mehrere Vorteile. Es werden fast ausschließlich nur die Fluorochrome innerhalb des Fokus angeregt, weil zur Anregung mehrere Photonen mehr oder weniger gleichzeitig ankommen müssen, was fast nur im Fokus passiert, oder umgekehrt ausgedrückt ist die Anregungswahrscheinlichkeit außerhalb des Fokus sehr gering. Ein weiterer Vorteil ist die höhere Eindringtiefe bei der Verwendung von Wellenlängen im IR Bereich (Streuung ist geringer). Ein weiterer Vorteil besteht darin, dass kein Pinhole notwendig ist, es kann also alles emittierte Licht dem Beleuchtungsfokus zugeordnet werden. Daher ist es auch möglich, Licht aus allen Richtungen zu sammeln. Im Gegensatz dazu ist es bei konfokaler Mikroskopie erforderlich, gestreutes und gebeugtes Licht zu unterdrücken, was die Signalausbeute reduziert. Ganz abgesehen von all diesen Vorteilen in der höheren Signalausbeute bei probeschonend geringer Beleuchtungsintensität liegt ein baulicher Vorteil darin, dass die ohnehin schon vorhandene Detektionsoptik des SPIM-Mikroskops für diese Multiphoton-Signalerfassung verwendet werden kann, so dass sich alle diese Vorteile ohne weiteren konstruktiven Aufwand mit nur relativ geringem softwaretechnischem Aufwand verwirklichen lassen.

Die STED-Technik lässt sich außerdem noch für die im Multiphoton-Beleuchtung einsetzen, mit welcher sich eine Auflösung von etwa 300 nm im Multiphoton-Betrieb bis auf eine Auflösung von wenigen nm im Multiphoton-plus-STED-Betrieb weiter reduzieren lässt.

Softwaretechnisch ist es auch möglich, die von der Kamera 16 aufgenommenen Daten zeilen- oder pixelweise zu trennen und somit gleichzeitig ein SPIM-Bild und ein Multiphoton-Bild zu erzeugen. Damit könnte dann auf eine Umschaltung zwischen SPIM-Betrieb und Multiphoton-Betrieb verzichtet werden, oder der gleichzeitige SPIM-Betrieb und Multiphoton-Betrieb kann als eine weitere Schaltoption zu dem wahlweisen SPIM-Betrieb oder Multiphoton-Betrieb verwirklicht werden.

Zusammenfassend wird bei dem erfindungsgemäßen Mikroskop ein Teilaspekt der konfokalen Mikroskopie genutzt, nämlich der Teilaspekt der Beleuchtungsoptik, um ein Bild nach der SPIM-Technologie zu erzeugen, wobei diese Beleuchtungsoptik überdies mit einer Zoom-Optik modifiziert wurde, und sich gemäß der Erfindung darüber hinaus auch noch ein konfokales Bild erzeugen lässt, wenn auch eine Dimension geringer als das mit der SPIM-Technologie erzeugte Bild, oder alternativ oder zusätzlich zu dem konfokalen Bild ein Multiphoton-Bild erzeugen lässt, was auch anstatt des SPIM-Bildes erfolgen kann. Dadurch lässt sich nicht nur das nach der SPIM-Technologie erzeugte Bild wesentlich flexibler beeinflussen, sondern es lassen sich zusätzliche Bildinformationen konfokal oder durch Multiphoton-Detektion ermitteln, die sich je nach Anwendung auch als ein Overlay in das SPIM-Bild bzw. das Multiphoton-Bild kombinieren lassen. Durch Zu- oder Abschaltung eines STED-Strahles lässt sich das Bild noch weiter beeinflussen bzw. es lassen sich sogar noch weitere Datenströme für verschiedene Bilder erzeugen, welche überdies den Vorteil haben, simultan erzeugt zu werden. Das erfindungsgemäße Mikroskop lässt sich damit vielseitiger verwenden, wobei sich synergistische Effekte in den Möglichkeiten der Bild-Beeinflussung und gleichzeitig in der Vielzahl auswertbarer Bildinformation verwirklichen lassen.

## Patentansprüche

1. SPIM (Selective Plane Illumination Microscopy) - Mikroskop mit:
einer Beleuchtungsquelle (4), welche einen Beleuchtungs-Lichtstrahl (5, 41) aus einer y-Richtung auf ein abzubildendes Objekt (2) sendet; einer Kamera (16), welche in z-Richtung als einer ersten Detektionsrichtung von einem Objekt (2) ausgesendetes Fluoreszenzlicht und/oder reflektiertes Licht erfasst, wobei sich die z-Richtung im Wesentlichen senkrecht zur y-Richtung erstreckt, und
einem x-Scanner (12), welcher durch Scannen des Beleuchtungs-Lichtstrahls (5, 41) in einer x-Richtung sequenziell ein Lightsheet (1) erzeugt, wobei sich die x-Richtung im Wesentlichen senkrecht zur y-Richtung und zur z-Richtung erstreckt und das Lightsheet (1) entsprechend sequenziell in einer von der x-Richtung und y-Richtung aufgespannten Ebene aufgebaut wird;
**gekennzeichnet durch**
eine Beleuchtungsoptik mit einer im Strahlengang des Beleuchtungs-Lichtstrahls (5, 41) angeordneten Zoomoptik (13) mittels welcher die Fokuslänge des Beleuchtungs-Lichtstrahls (5, 41) variierbar ist und/oder die Nummerische Apertur der Zoomoptik erhöhbar ist, um eine dünne Ebene zu beleuchten und um die nutzbare Ausdehnung des Lightsheet zu verringern; und durch
das sequentielle Aufnehmen von Bildfolgen entlang der y-Richtung, um eine erhöhte Auflösung entlang der z-Richtung zu erzielen.

2. SPIM-Mikroskop nach Anspruch 1, **gekennzeichnet durch** einen Fotodetektor (19), welcher von dem Objekt (2) entgegen der y-Richtung als eine zweite Detektionsrichtung ausgesendetes Detektionslicht in Form von Fluoreszenzlicht und/oder reflektiertem Licht erfasst.

3. SPIM-Mikroskop nach Anspruch 2, **dadurch gekennzeichnet, dass** parallel zu dem in z-Richtung erfassten zweidimensionalen Weitfeldbild entsprechend der SPIM-Technik konfokal ein eindimensionales Bild des Objekts (2) erzeugt wird, welches eine sich in der x-Richtung ersteckende Linie aufspannt.

4. SPIM-Mikroskop nach einem der Ansprüche 1 bis 3, **gekennzeichnet durch** einen ersten z-Scanner, welcher das Objekt (2) in z-Richtung bewegt, so dass sequenziell mehrere in z-Richtung im Abstand zueinander angeordnete Lightsheets (1) in jeweiligen Beleuchtungsebenen erzeugt werden, wobei ein optischer Abstand (L) zwischen den jeweiligen Lightsheets (1) und der Kamera (16) konstant bleibt.

5. SPIM-Mikroskop nach Anspruch 4, **gekennzeichnet durch** eine Bildverarbeitungseinheit (28), welche sequenziell erzeugte Bilder, welche durch die jeweiligen in z-Richtung im Abstand zueinander angeordneten Lightsheets (1) erzeugt wurden, zu einem dreidimensionalen Bild zusammensetzt.

6. SPIM-Mikroskop nach Anspruch 5 in Kombination mit Anspruch 2, **dadurch gekennzeichnet, dass** parallel zu dem dreidimensionalen mittels der SPIM-Technik erfassten Bild konfokal ein zweidimensionales Bild des Objekts (2) erzeugt, welches von der x-Richtung und z-Richtung aufgespannt wird.

7. SPIM-Mikroskop nach Anspruch 1 oder 2, **gekennzeichnet durch** einen zweiten z-Scanner, welcher den Beleuchtungs-Lichtstrahl (5, 41) in z-Richtung relativ zu dem Objekt (2) bewegt, um sequenziell mehrere in z-Richtung im Abstand zueinander angeordnete Lightsheets (1) zu erzeugen, und
einen dritten z-Scanner, welcher den Detektionsstrahlengang (11) entsprechend der Auslenkung des Beleuchtungs-Lichtstrahls (5, 41) in z-Richtung durch den zweiten z-Scanner nachführt, so dass ein Abstand zwischen dem Lightsheet (1) und der Kamera (16) konstant bleibt.

8. SPIM-Mikroskop nach Anspruch 7, **gekennzeichnet durch** eine Bildverarbeitungseinheit (28), welche sequenziell erzeugt Bilder, welche den jeweiligen in z-Richtung im Abstand zueinander angeordneten Lightsheets (1) zugeordnet werden können, zu einem dreidimensionalen Bild zusammensetzt.

9. SPIM-Mikroskop nach Anspruch 8 in Kombination mit Anspruch 2, **dadurch gekennzeichnet, dass** parallel zu dem dreidimensionalen mittels der SPIM-Technik erfassten Bild konfokal ein zweidimensionales Bild des Objekts (2) erzeugt, welches von der x-Richtung und z-Richtung aufgespannt wird.

10. SPIM-Mikroskop nach einem der vorangehenden Ansprüche, **dadurch gekennzeichnet, dass** die Zoomoptik (13), welche die Fokuslänge des Beleuchtungs-Lichtstrahls (5, 41) variieren kann, ein optischer Zoom ist, in welchem Linsengruppen relativ zueinander mechanisch verschoben werden.

11. SPIM-Mikroskop nach Anspruch 10, **dadurch gekennzeichnet, dass** mittels der Zoomoptik (13) die Fokuslänge des Beleuchtungs-Lichtstrahls (5, 41) durch eine Veränderung der numerischen Apertur verlängert bzw. verkürzt werden kann, und damit die Länge des von dem Lightsheet (1) ausgeleuchtet Feldes in der y-Beleuchtungsrichtung verlängerbar bzw. verkürzbar ist.

12. SPIM-Mikroskop nach einem der vorangehenden Ansprüche, **gekennzeichnet durch** einen elektronischen Zoom mittels welchem eine Scan-Länge in x-Richtung veränderbar ist.

13. SPIM-Mikroskop nach Anspruch 12, **dadurch gekennzeichnet, dass** die Anzahl von Bildpunkten in x-Richtung von dem elektronischen Zoom unabhängig von der eingestellten Scan-Länge in x-Richtung konstant gehalten wird.

14. SPIM-Mikroskop nach einem der Ansprüche 4 bis 13, **gekennzeichnet durch** einen elektronischen Zoom mittels welchem eine Scan-Länge in z-Richtung veränderbar ist längs welcher eine Mehrzahl von im Abstand zueinander angeordneten Lightsheets (1) sequenziell erzeugt werden.

15. SPIM-Mikroskop nach Anspruch 14, **dadurch gekennzeichnet, dass** die gleiche Anzahl von in z-Richtung im Abstand zueinander angeordneten Lightsheets (1) von dem elektronischen Zoom unabhängig von der eingestellten Scan-Länge in z-Richtung erzeugt wird.

16. SPIM-Mikroskop nach einem der vorangehenden Ansprüche, **dadurch gekennzeichnet, dass** der in x-Richtung gescannte Beleuchtungs-Lichtstrahl (5, 41) an oder in der Nähe eines Umkehrpunkts ausgeschaltet wird, an welchem eine maximale eingestellte Scan-Länge in x-Richtung erreicht ist.

17. SPIM-Mikroskop nach einem der vorangehenden Ansprüche, **dadurch gekennzeichnet, dass** die Kamera (16) ein Flächendetektor ist, welcher aus der Gruppe CMOS-Kamera, CCD-Kamera oder Array-Detektoren ausgewählt ist.

18. SPIM-Mikroskop nach einem der vorangehenden Ansprüche, **gekennzeichnet durch** einen Schalter, welcher zwischen den folgenden Betriebsmodi: konfokaler Detektion von Detektionslicht entgegen der y-Beleuchtungsrichtung; SPIM-Detektion von Weitfeld-Detektionslicht in z-Richtung; sowie gleichzeitiger Detektion der vorgenannten konfokalen Detektion und SPIM-Detektion umschaltbar ist.

19. SPIM-Mikroskop nach einem der vorangehenden Ansprüche, **gekennzeichnet durch** eine Abregungslichtquelle, welche einen das sequentiell erzeugte Lightsheet (1) in z-Richtung verdünnenden Abregungs-Lichtstrahl (40) aus der y-Richtung auf das abzubildende Objekt (2) sendet, wobei der Abregungs-Lichtstrahl (40) in z-Richtung versetzt zum Beleuchtungs-Lichtstrahl (41) auf das Objekt (2) gesendet wird und parallel zu dem Beleuchtungs-Lichtstrahl in x-Richtung gescannt wird.

20. SPIM-Mikroskop nach Anspruch 19, **gekennzeichnet durch** einen Anregungs-Lichtstrahl-Modulator mittels welchem der Anregungs-Lichtstrahl zu einem Besselbeam modulierbar ist.

21. SPIM-Mikroskop nach Anspruch 1, **dadurch gekennzeichnet, dass**
die Beleuchtungsquelle (4) ein gepulster Laser ist;
der Beleuchtungs-Lichtstrahl ein Multiphoton-Laserstrahl ist; und
entlang der z-Richtung ein Multiphoton-Signal detektiert wird.

22. SPIM-Mikroskop nach Anspruch 21, **dadurch gekennzeichnet, dass** die Kamera (16) eine schnelle Kamera ist, welche zusätzlich zu der Detektion des SPIM-Signals auch zur Detektion des Multiphoton-Signals ausgebildet ist.

23. SPIM-Mikroskop nach Anspruch 21, **gekennzeichnet durch** einen umschaltbaren Spiegel (43), mittels welchem das Multiphoton-Signal aus der z-Richtung auskoppelbar und auf einen Photodetektor (45) lenkbar ist.

24. SPIM-Mikroskop nach Anspruch 1, **dadurch gekennzeichnet, dass** ein größerer Objektbereich aufnehmbar ist durch das Aneinandersetzen von sequentiell aufgenommenen benachbarten Bildern von Objektbereichen.

25. SPIM-Mikroskop nach Anspruch 24, **dadurch gekennzeichnet, dass** das Objekt in x-Richtung oder y-Richtung verschiebbar ist, um einen neuen Objektbereich zu beleuchten und mit der Kamera aufzunehmen, wobei die aufgenommenen Bilder zu einem großen Gesamtbild vereint werden können.

## Claims

1. SPIM (selective plane illumination microscopy) microscope, having:
an illumination source (4) transmitting an illumination light beam (5, 41) from a y-direction onto an object (2) to be imaged; a camera (16) capturing fluorescence light and/or reflected light emitted in the z-direction as a first detection direction from an object (2), wherein the z-direction extends substantially perpendicularly to the y-direction, and
an x-scanner (12) producing a light sheet (1) by sequentially scanning the illumination light beam (5, 41) in an x-direction, wherein the x-direction extends substantially perpendicularly to the y-direction and to the z-direction and the light sheet (1) is accordingly built sequentially in a plane defined by the x-direction and y-direction;
**characterized by**
an illumination optical unit having a zoom optical unit (13) that is arranged in the beam path of the illumination light beam (5, 41) and by means of which the focal length of the illumination light beam (5, 41) is variable and/or the numerical aperture of the zoom optical unit is increasable to illuminate a thin plane and to reduce the utilizable extent of the light sheet; and by the sequential recording of image sequences along the y-direction to attain increased resolution along the z-direction.

2. SPIM microscope according to Claim 1, **characterized by** a photodetector (19) capturing detection light that has been emitted by the object (2) counter to the y-direction as a second detection direction in the form of fluorescence light and/or reflected light.

3. SPIM microscope according to Claim 2, **characterized in that** a one-dimensional image of the object (2) spanning a line extending in the x-direction is confocally produced parallel to the two-dimensional wide field image that is captured in the z-direction in accordance with the SPIM technique.

4. SPIM microscope according to one of Claims 1 to 3, **characterized by** a first z-scanner that moves the object (2) in the z-direction, with the result that a plurality of light sheets (1), arranged at a distance from one another in the z-direction, are produced sequentially in respective illumination planes, wherein an optical distance (L) between the respective light sheets (1) and the camera (16) remains constant.

5. SPIM microscope according to Claim 4, **characterized by** an image processing unit (28) combining sequentially produced images, which were produced by the respective light sheets (1) that are arranged at a distance from one another in the z-direction, to form a three-dimensional image.

6. SPIM microscope according to Claim 5 in combination with Claim 2, **characterized in that** a two-dimensional image of the object (2), defined by the x-direction and z-direction, is confocally produced parallel to the three-dimensional image that is captured by means of the SPIM technique.

7. SPIM microscope according to Claim 1 or 2, **characterized by** a second z-scanner that moves the illumination light beam (5, 41) in the z-direction relative to the object (2) to sequentially produce a plurality of light sheets (1), which are arranged at a distance from one another in the z-direction, and
a third z-scanner that tracks the detection beam path (11) according to the deflection of the illumination light beam (5, 41) in the z-direction by way of the second z-scanner such that a distance between the light sheet (1) and the camera (16) remains constant.

8. SPIM microscope according to Claim 7, **characterized by** an image processing unit (28) which combines sequentially produced images that can be assigned to the respective light sheets (1), which are arranged at a distance from one another in the z-direction, to form a three-dimensional image.

9. SPIM microscope according to Claim 8 in combination with Claim 2, **characterized in that** a two-dimensional image of the object (2), defined by the x-direction and z-direction, is confocally produced parallel to the three-dimensional image that is captured by means of the SPIM technique.

10. SPIM microscope according to one of the preceding claims, **characterized in that** the zoom optical unit (13), which can vary the focal length of the illumination light beam (5, 41), is an optical zoom in which lens groups are mechanically displaced relative to one another.

11. SPIM microscope according to Claim 10, **characterized in that** the focal length of the illumination light beam (5, 41) can be lengthened or shortened by means of the zoom optical unit (13) by changing the numerical aperture, and consequently the length of the field that is lit by the light sheet (1) is able to be lengthened or shortened in the y illumination direction.

12. SPIM microscope according to one of the preceding claims, **characterized by** an electronic zoom by means of which a scanning length is able to be changed in the x-direction.

13. SPIM microscope according to Claim 12, **characterized in that** the number of image points in the x-direction is kept constant by the electronic zoom independently of the set scanning length in the x-direction.

14. SPIM microscope according to one of Claims 4 to 13, **characterized by** an electronic zoom by means of which a scanning length is able to be changed in the z-direction, along which a plurality of light sheets (1), arranged at a distance from one another, are sequentially produced.

15. SPIM microscope according to Claim 14, **characterized in that** the same number of light sheets (1), arranged at a distance from one another in the z-direction, is produced by the electronic zoom independently of the set scanning length in the z-direction.

16. SPIM microscope according to one of the preceding claims, **characterized in that** the illumination light beam (5, 41) that is scanned in the x-direction is switched off at or in the vicinity of a reversal point at which a maximally set scanning length in the x-direction is achieved.

17. SPIM microscope according to one of the preceding claims, **characterized in that** the camera (16) is an area-scan detector, selected from the group CMOS camera, CCD camera or array detectors.

18. SPIM microscope according to one of the preceding claims, **characterized by** a switch which is switchable between the following operating modes: confocal detection of detection light counter to the y illumination direction; SPIM detection of wide field detection light in the z-direction; and simultaneous detection of the previously mentioned confocal detection and SPIM detection.

19. SPIM microscope according to one of the preceding claims, **characterized by** a disexcitation light source that transmits a disexcitation light beam (40), which thins the sequentially produced light sheet (1) in the z-direction, from the y-direction onto the object (2) to be imaged, wherein the disexcitation light beam (40) is transmitted in the z-direction onto the object (2) with an offset with respect to the illumination light beam (41) and is scanned parallel to the illumination light beam in the x-direction.

20. SPIM microscope according to Claim 19, **characterized by** an excitation light beam modulator by means of which the excitation light beam is able to be modulated into a Bessel beam.

21. SPIM microscope according to Claim 1, **characterized in that**
the illumination source (4) is a pulsed laser;
the illumination light beam is a multiphoton laser beam; and
a multiphoton signal is detected along the z-direction.

22. SPIM microscope according to Claim 21, **characterized in that** the camera (16) is a fast camera that is embodied not only for the detection of the SPIM signal but also for the detection of the multiphoton signal.

23. SPIM microscope according to Claim 21, **characterized by** a switchable mirror (43) by means of which the multiphoton signal is able to be coupled out of the z-direction and to be directed at a photodetector (45).

24. SPIM microscope according to Claim 1, **characterized in that** a greater object region is recordable due to the stringing together of sequentially recorded adjacent images of object regions.

25. SPIM microscope according to Claim 24, **characterized in that** the object is displaceable in the x-direction or y-direction to illuminate a new object region and record it with the camera, wherein the recorded images can be combined to form a large total image.

## Revendications

1. Microscope SPIM (Selective Plane Illumination Microscopy), comportant :
une source d'éclairage (4) qui émet un faisceau lumineux d'éclairage (5, 41) dans une direction y vers un objet (2) dont l'image doit être formée ;
une caméra (16) qui détecte une lumière de fluorescence et/ou une lumière réfléchie émise par un objet (2) dans une direction z en tant que première direction de détection, dans lequel la direction z s'étend sensiblement perpendiculairement à la direction y, et
un dispositif de balayage x (12) qui génère séquentiellement une nappe lumineuse (1) par balayage du faisceau lumineux d'éclairage (5, 41) dans une direction x, dans lequel la direction x s'étend sensiblement perpendiculairement à la direction y et à la direction z et la nappe lumineuse (1) est construite séquentiellement de manière correspondante dans un plan contenant la direction x et la direction y ;
**caractérisé par**
une optique d'éclairage comprenant une optique de zoom (13) disposée sur le chemin du faisceau lumineux d'éclairage (5, 41), au moyen de laquelle la longueur focale du faisceau lumineux d'éclairage (5, 41) peut être modifiée et/ou l'ouverture numérique de l'optique de zoom peut être augmentée afin d'éclairer un plan de faible épaisseur et de réduire l'étendue utile de la nappe lumineuse ; et par
l'acquisition séquentielle de séries d'images suivant la direction y afin d'obtenir une résolution accrue suivant la direction z.

2. Microscope SPIM selon la revendication 1, **caractérisé par** un photodétecteur (19) qui détecte la lumière de détection, sous forme de lumière de fluorescence et/ou de lumière réfléchie, émise par l'objet (2) dans la direction y en tant que deuxième direction de détection.

3. Microscope SPIM selon la revendication 2, **caractérisé en ce qu'**une image unidimensionnelle de l'objet (2), qui contient une droite s'étendant dans la direction x, est générée de manière confocale selon la technique SPIM en parallèle avec l'image bidimensionnelle à champ large détectée dans la direction z.

4. Microscope SPIM selon l'une des revendications 1 à 3, **caractérisé par** un premier dispositif de balayage z qui déplace l'objet (2) dans la direction z, de manière à ce que plusieurs nappes lumineuses (1) disposées à distance les unes des autres dans la direction z soient générées séquentiellement dans des plans d'éclairage respectifs, dans lequel une distance optique (L) entre les nappes lumineuses (1) respectives et la caméra (16) reste constante.

5. Microscope SPIM selon la revendication 4, **caractérisé par** une unité de traitement d'image (28) qui combine des images générées séquentiellement, qui ont été générées par les nappes lumineuses (1) respectives disposées à distance les unes des autres dans la direction z, en une image tridimensionnelle.

6. Microscope SPIM selon la revendication 5 en association avec la revendication 2, **caractérisé en ce que**, parallèlement à l'image tridimensionnelle détectée par la technique SPIM, une image bidimensionnelle de l'objet (2), qui contient la direction x et la direction z, est générée de manière confocale.

7. Microscope SPIM selon la revendication 1 ou 2, **caractérisé par** un deuxième dispositif de balayage z qui déplace le faisceau lumineux d'éclairage (5, 41) dans la direction z par rapport à l'objet (2), pour générer séquentiellement plusieurs nappes lumineuses (1) disposées à distance les unes des autres dans la direction z, et
un troisième dispositif de balayage z qui suit le chemin du faisceau de détection (11) d'une manière qui correspond à la déviation du faisceau lumineux d'éclairage (5, 41) dans la direction z par le deuxième dispositif de balayage z de manière à ce qu'une distance entre la nappe lumineuse (1) et la caméra (16) reste constante.

8. Microscope SPIM selon la revendication 7, **caractérisé par** une unité de traitement d'image (28) qui combine des images générées séquentiellement, qui peuvent être associées aux nappes lumineuses (1) respectives disposées à distance les unes des autres dans la direction z, en une image tridimensionnelle.

9. Microscope SPIM selon la revendication 8 en association avec la revendication 2, **caractérisé en ce qu'**une image bidimensionnelle de l'objet (2), qui contient la directions x et la directions z, est générée de manière confocale en parallèle avec l'image tridimensionnelle détectée par la technique SPIM.

10. Microscope SPIM selon l'une des revendications précédentes, **caractérisé en ce que** l'optique de zoom (13), qui peut faire varier la longueur focale du faisceau lumineux d'éclairage (5, 41), est un zoom optique dans lequel des groupes de lentilles sont déplacés mécaniquement les uns par rapport aux autres.

11. Microscope SPIM selon la revendication 10, **caractérisé en ce que** la longueur focale du faisceau lumineux d'éclairage (5, 41) peut être allongée ou raccourcie au moyen de l'optique de zoom (13) par une modification de l'ouverture numérique, et **en ce que** la longueur du champ éclairé par la nappe lumineuse (1) peut ainsi être allongée ou raccourcie dans la direction d'éclairage y.

12. Microscope SPIM selon l'une des revendications précédentes, **caractérisé par** un zoom électronique au moyen duquel une longueur de balayage peut être modifiée dans la direction x.

13. Microscope SPIM selon la revendication 12, **caractérisé en ce que** le nombre de pixels dans la direction x est maintenu constant par le zoom électronique indépendamment de la longueur de balayage réglée dans la direction x.

14. Microscope SPIM selon l'une des revendications 4 à 13, **caractérisé par** un zoom électronique au moyen duquel une longueur de balayage dans la direction z peut être modifiée et le long duquel plusieurs nappes lumineuses (1) sont générées séquentiellement à distance les unes des autres.

15. Microscope SPIM selon la revendication 14, **caractérisé en ce que** le même nombre de nappes lumineuses (1) disposées à distance les unes des autres dans la direction z sont générées par le zoom électronique indépendamment de la longueur de balayage réglée dans la direction z.

16. Microscope SPIM selon l'une des revendications précédentes, **caractérisé en ce que** le faisceau lumineux d'éclairage (5, 41) balayé dans la direction x est désactivé à l'emplacement ou à proximité d'un point d'inversion où une longueur de balayage maximale réglée dans la direction x est atteinte.

17. Microscope SPIM selon l'une des revendications précédentes, **caractérisé en ce que** la caméra (16) est un détecteur bidimensionnel choisi dans le groupe constitué par une caméra CMOS, une caméra CCD ou un réseau de détecteurs.

18. Microscope SPIM selon l'une des revendications précédentes, **caractérisé par** un commutateur qui peut basculer entre les modes de fonctionnement suivants :
détection confocale d'une lumière de détection dans la direction d'éclairement y ;
détection SPIM d'une lumière de détection à champ large dans la direction z ; et détection simultanée de la détection confocale précitée et de la détection SPIM.

19. Microscope SPIM selon l'une des revendications précédentes, **caractérisé par** une source de lumière d'excitation qui émet dans la direction y vers l'objet (2) dont l'image doit être formée un faisceau lumineux d'excitation (40) amincissant la nappe lumineuse (1) générée séquentiellement dans la direction z, dans lequel le faisceau lumineux d'excitation (40) est émis vers l'objet (2) en étant décalé dans la direction z par rapport au faisceau lumineux d'éclairage (41) et est balayé parallèlement au faisceau lumineux d'éclairage dans la direction x.

20. Microscope SPIM selon la revendication 19, **caractérisé par** un modulateur de faisceau lumineux d'excitation au moyen duquel le faisceau lumineux d'excitation peut être modulé en un faisceau de Bessel.

21. Microscope SPIM selon la revendication 1, **caractérisé en ce que** la source d'éclairage (4) est un laser puisé ;
le faisceau lumineux d'éclairage est un faisceau laser multiphotons ; et
**en ce qu'**un signal multiphotons est détecté suivant la direction z.

22. Microscope SPIM selon la revendication 21, **caractérisé en ce que** la caméra (16) est une caméra rapide qui, en plus de détecter le signal SPIM, est également conçue pour détecter le signal multiphotons.

23. Microscope SPIM selon la revendication 21, **caractérisé par** un miroir commutable (43) au moyen duquel le signal multiphotons peut être découplé de la direction z et dirigé vers un photodétecteur (45).

24. Microscope SPIM selon la revendication 1, **caractérisé en ce qu'**une plus grande zone d'objet peut être acquise par combinaison d'images adjacentes acquises séquentiellement de zones d'objet.

25. Microscope SPIM selon la revendication 24, **caractérisé en ce que** l'objet peut être déplacé dans la direction x ou dans la direction y pour éclairer une nouvelle zone d'objet et l'acquérir au moyen de la caméra, dans lequel les images acquises peuvent être regroupées en une image d'ensemble de grande taille.
